# EUROPÄISCHE PATENTSCHRIFT

(11) **EP 1 285 740 B1**
(45) Veröffentlichungstag und Bekanntmachung des Hinweises auf die Patenterteilung: **29.09.2010**
(21) Anmeldenummer: 01890227.0
(22) Anmeldetag: 07.08.2001
(51) Int. Cl.: B29C 47/88, B29C 33/04

(54) **Vorrichtung zur Herstellung von Kunststofffolien**
Apparatus for producing plastic films
Dispositif pour la fabrication d'un film en matière plastique

(43) Veröffentlichungstag der Anmeldung: 26.02.2003
(73) Patentinhaber: SML Maschinengesellschaft m.b.H., 4860 Lenzing (AT)
(72) Erfinder: Becker, Rupert, 4840 Vöcklabruck (AT); Haider, Bruno, 4810 Gmunden (AT)
(74) Vertreter: Heger, Georg

(56) Entgegenhaltungen:
- US-A- 3 107 394
- US-A- 4 408 974
- US-A- 4 632 655
- US-A- 5 006 056
- PATENT ABSTRACTS OF JAPAN vol. 011, no. 241 (M-614), 7. August 1987 (1987-08-07) -& JP 62 053816 A (ISHIKAWAJIMA HARIMA HEAVY IND CO LTD), 9. März 1987 (1987-03-09)
- PATENT ABSTRACTS OF JAPAN vol. 1997, no. 10, 31. Oktober 1997 (1997-10-31) -& JP 09 150429 A (ISHIKAWAJIMA HARIMA HEAVY IND CO LTD), 10. Juni 1997 (1997-06-10)
- PATENT ABSTRACTS OF JAPAN vol. 009, no. 046 (M-360), 27. Februar 1985 (1985-02-27) -& JP 59 185620 A (TOUKIYOU JIYUSHI SANGYO KK), 22. Oktober 1984 (1984-10-22)

## Beschreibung

Die Erfindung betrifft eine Vorrichtung zur Herstellung von Kunststofffolien aus einer Kunststoffschmelze mit einem Walzenstuhl, in dem zumindest eine Kühlwalze drehbar gelagert ist, wobei ein Teil der Vorrichtung austauschbar und zum Anpressen der Kunststofffolie an die im Walzenstuhl gelagerte Kühlwalze und zum Kühlen derselben am Walzenstuhl befestigbar ist.

Aus der US 4 632 655 A D1 ist eine Prägevorrichtung für thermoplastische Folien bekannt, bei welcher die bereits fertiggestellte Kunststofffolie zwischen einer Prägewalze und einer Gegenwalze geprägt wird; hiedurch können unterschiedliche Prägemuster hergestellt werden.

Es ist bereits aus der US 5,006,056 A bekannt, bei einer Vorrichtung zur Herstellung von Kunststofffolien eine Kühlwalze auf einem Wagen vorzusehen und somit den Austausch der Kühlwalze zu vereinfachen. Dadurch wird zwar der Austausch von großen, schweren Kühlwalzen vereinfacht, jedoch kann mit einer derartigen Vorrichtung nur eine bestimmte Art Kunststofffolie hergestellt werden.

Ziel der vorliegenden Erfindung ist es nun, eine Vorrichtung zur Herstellung von Kunststofffolien zu schaffen, welche auf einfache und schnelle Weise, vorzugsweise ohne Zuhilfenahme von Werkzeug und Hilfsmittel, beispielsweise Hebe- oder Ausbauvorrichungen umgerüstet werden kann. Auf diese Weise sollen verschiedene Kunststofffolien, insbesondere Kunststofffolien unterschiedlicher Dicke und mit unterschiedlicher Oberflächenrauigkeit, Oberflächenstruktur oder Oberflächenbeschaffenheit hergestellt werden können.

Die erfindungsgemäße Vorrichtung der eingangs angeführten Art ist **dadurch gekennzeichnet, dass** zur Herstellung verschiedener Kunststofffolien jeweils eines der verschiedenen Module als austauschbarer Teil vorgesehen ist, wobei ein Modul eine Walze zum Anpressen und Kühlen der Kunststofffolie aufweist und ein weiteres Modul vorgesehen ist, das zum Anpressen und Kühlen der Kunststofffolie ein Endlosband zur Flächenglättung aufweist. Das austauschbare Modul ist vorzugsweise verschiebbar oder verschwenkbar angeordnet.

Da die Dicke der hergestellten Kunststofffolie insbesondere von der zum Anpressen und Kühlen der Kunststofffolie vorgesehenen Vorrichtung abhängt, wird durch die Ausgestaltung der Vorrichtung als einfach und schnell auszutauschendes Modul eine Vorrichtung zur Herstellung von Kunststofffolien geschaffen, bei welcher mit äußerst geringen Umrüstzeiten die Produktion auf verschiedenste Kunststofffolien umgestellt werden kann. Insbesondere eignet sich ein derartiges Modul zum Anpressen und Kühlen der Kunststofffolie bei einem Glättwerk, bei dem im Walzenstuhl zwei und Kühlwalzen zur Kühlung der Kunststofffolie vorgesehen sind. Bei derartigen Glättwerken kann durch den Austausch des Moduls zum Anpressen und Kühlen der Kunststofffolie eine große Variation verschiedenster Kunststofffolien mit unterschiedlicher Oberflächenrauigkeit, Oberflächenstruktur oder Oberflächenbeschaffenheit und unterschiedlicher Dicke hergestellt werden. Selbstverständlich kann das Modul zum Anpressen und Kühlen der Kunststofffolie jedoch auch an einen Walzenstuhl mit einer großen Kühlwalze (Chill-Roll) angeschlossen werden. Zur Erzielung verschiedener Eigenschaften der zu erzeugenden Kunststofffolie werden beispielsweise Walzen mit Kunststoffoberfläche, wie zum Beispiel Gummi, Metallwalzen oder Prägewalzen mit glatter oder strukturierter Oberfläche eingesetzt.

Um relativ dicke Kunststofffolien mit einer Dicke größer 500 µm herzustellen, ist ein Modul zum Anpressen und Kühlen der Kunststofffolie vorgesehen, das insbesondere eine Walze mit Kunststoffoberfläche, eine Metallwalze oder eine Prägewalze aufweist.

Um Kunststofffolien mit einer Dicke zwischen 50 und 500 µm zu produzieren, welche eine gegenüber den mittels einer Walze angepressten Kunstofffolien geringere Orientierungen, verbesserte mechanische Eigenschaften und verbesserte optische Eigenschaftenaufweisen, ist das weitere Modul zum Anpressen und Kühlen der Kunststofffolie vorgesehen, das ein Endlosband aufweist. Als Endlosband wird hierbei insbesondere ein endloses, nicht geschweißtes Metallband verwendet, welches auch unter dem Begriff "Sleeve-Band" bekannt ist. Durch das Endlosband, welches vorzugsweise ebenfalls gekühlt wird, findet eine Flächenglättung der Kunststofffolie statt.

Zur Herstellung von Kunststofffolien mit einer Dicke unter 50 µm und einer äußerst glatten Oberfläche, ist es vorteilhaft, wenn das Modul zum Anpressen und Kühlen der Kunststofffolie ein Luftrakel (auch Airknife genannt) oder ein Modul zur Flächenpressung der Kunststofffolie eine sogenannte Softbox oder Vakuumbox aufweist.

Wenn zwischen dem Modul zum Anpressen und Kühlen der Kunststofffolie im befestigten Zustand und einer ersten im Walzenstuhl gelagerten Walze eine Vorrichtung zum Einbringen der Kunststoffschmelze angeordnet ist, kann das Modul auf einfache Weise an einem breitseitigen Ende des Walzenstuhls befestigt werden und mittels der Art der Anpressung und Abkühlung des flüssigen Kunststoffmaterials an die erste im Walzenstuhl gelagerte Walze, die Oberflächenrauigkeit, die Oberflächenstruktur oder die Oberflächenbeschaffenheit bzw. die Dicke der hergestellten Kunststofffolie zuverlässig bestimmt werden.

Für einen besonders einfachen, schnellen unproblematischen Austausch des Moduls ist es von Vorteil, wenn das Modul zum Anpressen und Kühlen der Kunststofffolie auf einem mehrere Rollen aufweisenden Wagen angeordnet ist.

Für eine einfache Lagebestimmung des Moduls am Walzenstuhl, sowie um eine genaue Ausrichtung des Moduls relativ zum Walzenstuhl in der befestigten Stellung zu gewährleisten, ist es günstig, wenn zur Verbindung des Moduls mit dem Walzenstuhl zumindest ein Zentrierbolzen ist.

Dabei ist es insbesondere günstig, wenn das Modul zumindest einen konischen Zentrierbolzen aufweist, der sich zu seinen freien Enden hin verjüngt, da somit beim Zusammenfügen der Verbindung eine automatische Zentrierung erfolgt. Wenn die Achse des konischen Zentrierbolzens zu einer Anschlagplatte des Wagens angeordnet ist, kann der Wagen auf einfache Weise an eine Breitseite der Vorrichtung herangeschoben und mit dem Walzenstuhl verbunden werden.

Für eine einfache, schnelle und auch wieder lösbare Verbindung zwischen dem Wagen und dem Walzenstuhl ist es von Vorteil, wenn zur Befestigung des Wagens an dem Walzenstuhl Schrauben vorgesehen sind.

Hinsichtlich eines schnellen, einfachen Anschlusses des Moduls an eine Flüssigkeitsversorgung für etwaige Kühlzwecke ist es günstig, wenn zur Verbindung von Kühlflüssigkeitsleitungen zwischen dem Modul und der übrigen Vorrichtung Steckverbindungen vorgesehen sind, wobei als Steckverbindungen beispielsweise Bajonettverbindungen, Schnellkupplungen oder der. vorgesehen sein können. Selbstverständlich kann zur Kühlung auch ein gasförmiges Medium verwendet werden.

Ebenso ist es für einen schnellen, einfachen Austausch bzw. Anschluss des Moduls von Vorteil, wenn zur Verbindung von Hydraulik- und bzw. oder Pneumatikleitungen zwischen dem Modul und der übrigen Vorrichtung Steckverbindungen vorgesehen sind, wobei die Hydraulik- und bzw. oder Pneumatikleitungen insbesondere zum Anschluss an diverse Hydraulik- und bzw. oder Pneumatikzylinder zur genauen Positionierung der diversen Anpressvorrichtungen vorgesehen sind. Auch hierbei können verschiedenste Steckverbindungen, wie Bajonettverschlüsse, Schnellkupplungen und der. vorgesehen sein. Ebenso ist es zur Stromversorgung von verschiedensten Elektroapplikationen des Moduls günstig, wenn zur Verbindung von Stromleitungen zwischen dem Modul und der übrigen Vorrichtung Steckverbindungen vorgesehen sind. Durch die Steckverbindungen soll insbesondere eine werkzeuglose, rasche Verbindung und Lösung aller verschiedenen Leitungen möglich werden.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig.1 eine Ansicht einer Vorrichtung zur Herstellung von Kunststofffolien mit einer Walze zum Anpressen der Kunststofffolie an eine in einem Walzenstuhl gelagerte Walze;
Fig.2 eine Ansicht einer Vorrichtung zur Herstellung von Kunststofffolien ähnlich Fig.1, jedoch mit einem Luftrakel zum Anpressen der Kunststofffolie an eine Walze des Walzenstuhls;
Fig.3 eine Ansicht einer Vorrichtung ähnlich den Fig.1 und 2, jedoch mit einem Endlosband zum Anpressen der Kunststofffolie an eine Walze des Walzenstuhls, wobei das das Endlosband aufweisende Modul nicht an dem Walzenstuhl befestigt ist; und
Fig.4 im Detail einen Querschnitt eines Zentrierbolzens zur Zentrierung des Moduls bei der Befestigung am Walzenstuhl.

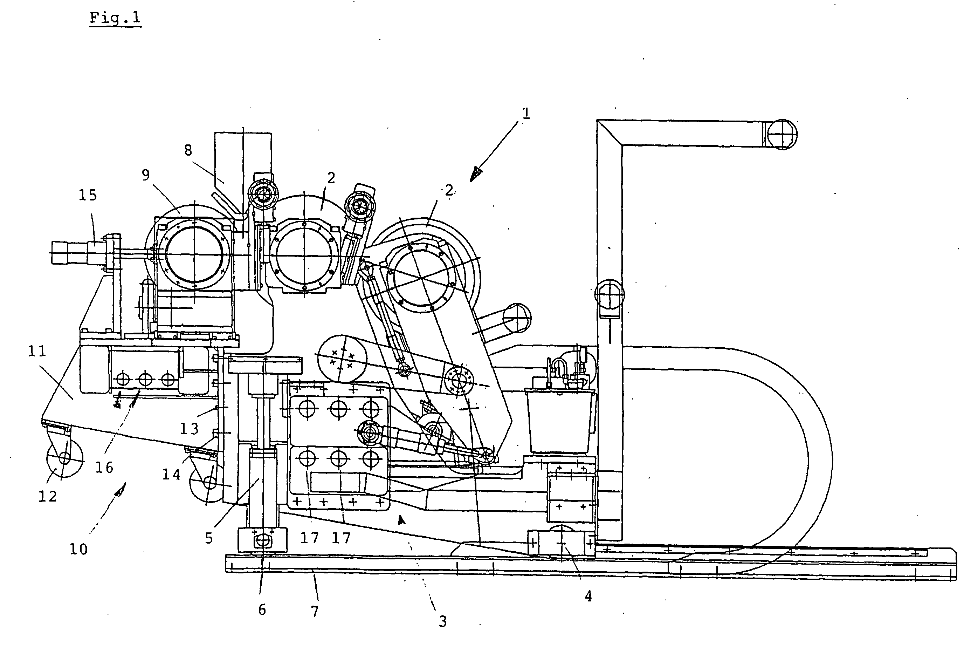

In Fig.1 ist ein Glättwerk 1 gezeigt, bei dem zwei Kühlwalzen 2 in einem gemeinsamen Walzenstuhl 3 gelagert sind, wobei der gesamte Walzenstuhl 3 um die Achse 4 schwenkbar gelagert ist. Zum Verschwenken des Walzenstuhls 3 ist eine Spindel 5 vorgesehen, die mittels einer Rolle 6 auf einer Schiene 7 verschieblich gelagert ist.

Über eine Düse 8 wird das zur Herstellung der Kunststofffolie vorgesehene Kunststoffmaterial in einen Spalt zwischen der ersten Kühlwalze 2 und der Glättwalze 9 eingebracht, wobei die Glättwalze 9 zur Bildung eines gesonderten, verschieblichen, fahrbaren oder verschwenkbaren und einfach austauschbaren Moduls 10 auf einem Wagen 11 angeordnet ist.

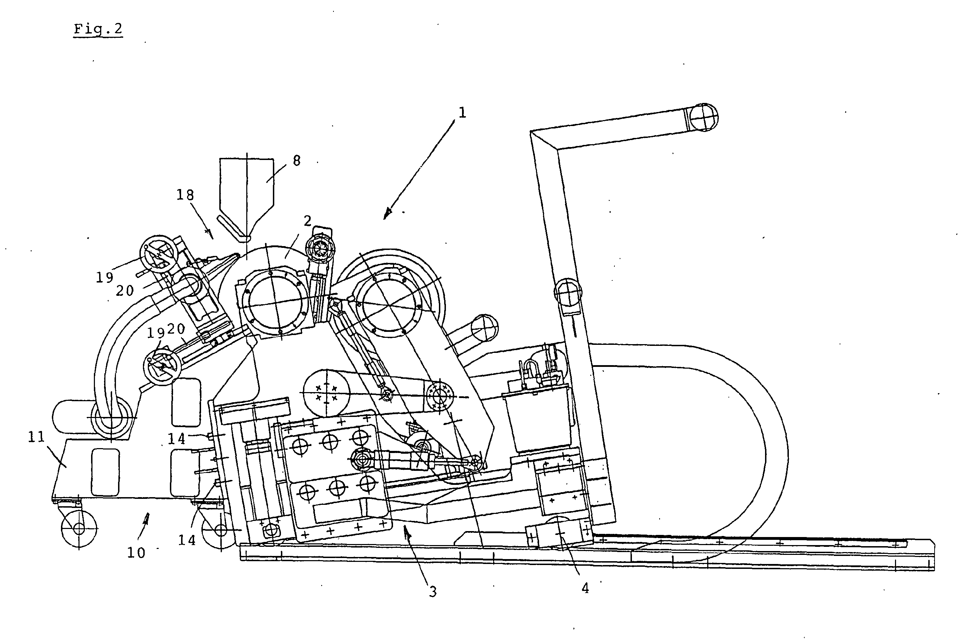

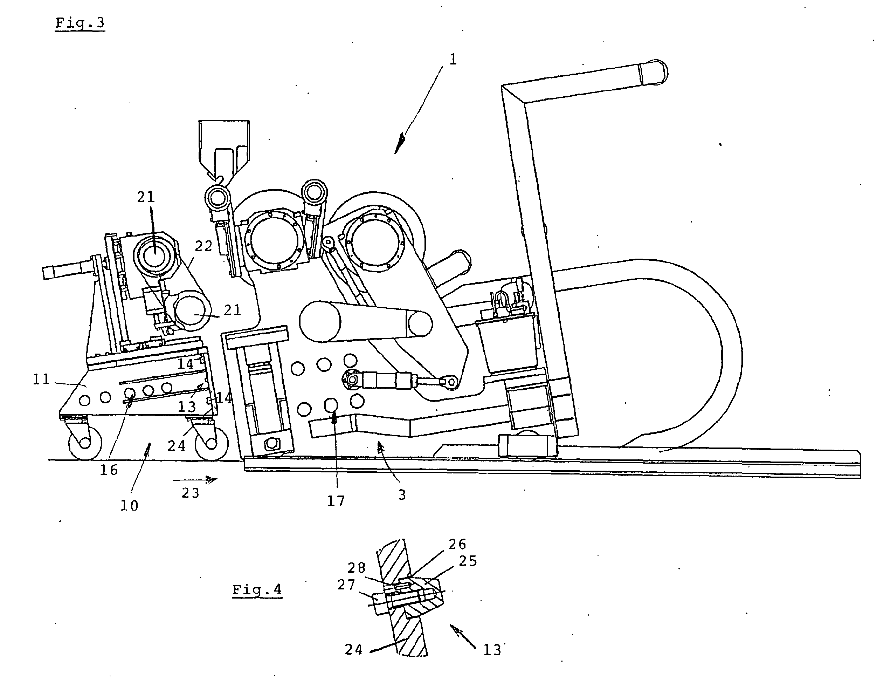

Der Wagen 11 kann in der nach unten verschwenkten Position des Walzenstuhls 3 (vgl. Fig. 2 und 3) mit Hilfe der Rollen 12 auf einfache Weise an den Walzenstuhl 3 herangeschoben werden, wonach er mit Hilfe von zwei Zentrierbolzen 13 (vgl. auch Fig.4) in seiner Position zum Walzenstuhl 3 zentriert wird und danach mit Hilfe von Befestigungsschrauben 14 am Walzenstuhl 3 befestigt wird. Somit kann das Modul 10 zum Anpressen und Kühlen der Kunststofffolie an die Kühlwalze 2 auf einfache und insbesondere schnelle Weise an dem Walzenstuhl 3 befestigt werden. Zur genauen Positionierung der Glättwalze 9 gegenüber der Kühlwalze 2 ist ein Zylinder 15, der pneumatisch oder hydraulisch betätigt werden kann, zur vertikalen Verstellung der Glättwalze 9 vorgesehen.

Um das Modul 10 mit Wasser, Strom, Luft bzw. Hydraulikflüssigkeit zu versorgen, sind diverse Steckanschlüsse 16 in einer Seitenwand des Wagens 11 vorgesehen, über welche mit Hilfe von diversen Schnellverschlusskupplungen eine Leitungsverbindung mit Steckanschlüssen 17 des Walzenstuhls 3 hergestellt werden kann.

Mit Hilfe der modularen Ausgestaltung der Vorrichtung zum Anpressen und Kühlen der Kunststofffolie an die Kühlwalze 2 kann somit die Vorrichtung 1 von der in Fig.1 gezeigten Glättwalze 9 auf verschiedene andere Vorrichtungen zum Anpressen und Kühlen der Kunststofffolie an die Kühlwalze 2 umgerüstet werden. Der Produktionsstop für einen Umrüstvorgang beträgt dabei üblicherweise weniger als 45 Minuten.

In Fig.2 ist ein Glättwerk 1 gezeigt, bei dem der Walzenstuhl 3 jenem des Glättwerks der in Fig.1 gezeigten Vorrichtung entspricht, jedoch ist anstelle des Moduls 10, welches eine Glättwalze 9 zum Anpressen der Kunststofffolie an die Kühlwalze 2 aufweist, ein Modul 10 gezeigt, das ein Luftrakel 18 (Air-Knife) aufweist.

Mit Hilfe des in Fig.2 gezeigten Moduls 10 mit einem Luftrakel 18 können gegenüber einer Vorrichtung mit einer Glättwalze 9 wesentlich dünnere und auch eine glattere und glänzendere Oberfläche aufweisende Kunststofffolien hergestellt werden. Beispielsweise können mit dem Luftrakel 18 als Anpressvorrichtung Polypropylen-Folien mit einer Dicke von < 100 µm hergestellt werden, während die in Fig.1 gezeigte Glättwalze 9 insbesondere zur Herstellung von Polypropylen- Folien mit einer Dicke > 500 µm geeignet ist.

Bei der in Fig.2 gezeigten Stellung des Walzenstuhls 3 ist dieser gegenüber der in Fig.1 gezeigten Stellung um die Achse 4 in seine nach unten verschwenkte Position gezeigt, wodurch der modulare Wagen 11 auf einfache Weise mit dem Walzenstuhl 3 durch heranschieben verbunden werden kann. Nach Befestigung des Moduls 10 an den Walzenstuhl 3 mittels der Befestigungsschrauben 14 wird dieser in seine nach oben verschwenkte Produktionsstellung in Richtung der Düse 8 verschwenkt.

Zur Feinjustierung des Luftrakels 18 relativ zu der Kühlwalze 2 ist dieses mittels Handrädern 19, die jeweils mit einem Spindeltrieb 20 verbunden sind, auf dem Wagen 11 verstellbar angeordnet.

In Fig.3 ist der Walzenstuhl 3 des Glättwerks 1 ebenfalls in seiner nach unten verschwenkten Modulwechselstellung gezeigt, wobei ein Modul 10 mit einem um zwei Umlenkwalzen 21 geschlungenen Endlosband 22 in einer noch nicht am Walzenstuhl 3 befestigten Stellung gezeigt ist.

Das Endlosband 22 ist insbesondere dazu geeignet, Kunststofffolien mit einer Dicke zwischen 50 und 500 µm herzustellen, und eignet sich somit insbesondere für jene Bereiche, in welchen weder die in Fig.1 gezeigte Glättwalze 9, noch das in Fig.2 gezeigte Luftrakel 18 besonders gut geeignet sind.

Zur Befestigung des Moduls 10 am Walzenstuhl 3 wird der Wagen 11 in Richtung 23 an den Walzenstuhl 3 herangeschoben, wonach mittels Zentrierbolzen 13, welche in seitlich angeordneten Anschlagplatten 24 beidseitig vorgesehen sind, das Modul 10 gegenüber dem Walzenstuhl 3 ausgerichtet, danach mittels Schrauben 14 an dem Walzenstuhl 3 befestigt wird.

Zur Versorgung des Moduls 10 mit Strom, Luft, Hydraulikflüssigkeit sowie einem Medium zur Kühlung der Walzen 21 sind im Wagen 10 wiederum Anschlüsse 16 vorgesehen, welche mittels Steckverbindungen über Leitungen (nicht gezeigt) mit entsprechenden Anschlüssen 17 am Walzenstuhl 3 verbunden werden können.

Mit Hilfe der in den Fig.1 bis 3 gezeigten Module 10 kann somit ein Glättwerk 1 binnen kürzester Zeit (in der Regel sollte die Umrüstzeit 45 Minuten nicht übersteigen) zur Herstellung bzw. Glättung verschiedener Kunststofffolien untersch iedlicher Dicke und unterschiedlicher Oberflächenrauigkeit, Oberflächenstruktur oder Oberflächenbeschaffenheit umgerüstet werden. Zudem ergibt sich auch die Möglichkeit eines schnellen und einfachen Austauschs eines Moduls, sollte dieses aufgrund von Verschleißerscheinungen erforderlich sein.

In Fig.4 ist noch im Detail der Zentrierbolzen 13 zur Zentrierung des Moduls 10 am Walzenstuhl 3 gezeigt, welcher aus einer konischen Hülse 25 in einer Ausnehmung 26 der Anschlagplatte 24 besteht und mit Hilfe einer Schraube 27 befestigt ist, wobei zusätzlich ein Zentrierstift 28 zur genauen Ausrichtung der konischen Hülse 25 vorgesehen ist.

## Patentansprüche

1. Vorrichtung (1) zur Herstellung von Kunststofffolien aus einer Kunststoffschmelze mit einem Walzenstuhl (3), in dem zumindest eine Kühlwalze (2) drehbar gelagert ist, wobei ein Teil der Vorrichtung (1) austauschbar und zum Anpressen der Kunststofffolie an die im Walzenstuhl (3) gelagerte Kühlwalze (2) und zum Kühlen derselben am Walzenstuhl (3) befestigbar ist, **dadurch gekennzeichnet, dass** zur Herstellung verschiedener Kunststofffolien jeweils eines der verschiedenen Module (10) als austauschbarer Teil vorgesehen ist, wobei ein Modul (10) eine Walze (9) zum Anpressen und Kühlen der Kunststofffolie aufweist und ein weiteres Modul (10) vorgesehen ist, das zum Anpressen und Kühlen der Kunststofffolie ein Endlosband (22) zur Flächenglättung aufweist.

2. Vorrichtung nach Anspruch 1, **dadurch gekennzeichnet, dass** das austauschbare Modul (10) verschiebbar oder verschwenkbar angeordnet ist.

3. Vorrichtung nach Anspruch 1 oder 2, **dadurch gekennzeichnet, dass** im Walzenstuhl (3) zwei Kühlwalzen (2) zur Kühlung der Kunststofffolie vorgesehen sind.

4. Vorrichtung nach Anspruch 1 bis 3, **dadurch gekennzeichnet, dass** das die Walze (9) aufweisende Modul (10) zum Anpressen und Kühlen der Kunststofffolie eine Walze mit Kunststoffoberfläche, eine Metallwalze oder eine Prägewalze aufweist.

5. Vorrichtung nach Anspruch 1 bis 3, **dadurch gekennzeichnet, dass** das Modul (10) zum Anpressen und Kühlen der Kunststofffolie ein gekühltes Endlosband (22) zur Flächenglättung aufweist.

6. Vorrichtung nach Anspruch 1 bis 3, **dadurch gekennzeichnet, dass** das Modul (10) zum Anpressen und Kühlen der Kunststofffolie ein Luftrakel (18) aufweist.

7. Vorrichtung nach Anspruch 1 bis 3, **dadurch gekennzeichnet, dass** das Modul zum Anpressen und Kühlen der Kunststofffolie ein Modul zur Flächenpressung der Kunststofffolie aufweist.

8. Vorrichtung nach einem der Ansprüche 1 bis 7, **dadurch gekennzeichnet, dass** zwischen dem Modul (10) zum Anpressen und Kühlen der Kunststofffolie im befestigten Zustand und einer ersten im Walzenstuhl (3) gelagerten Walze (2) eine Vorrichtung (8) zum Einbringen der Kunststoffschmelze angeordnet ist.

9. Vorrichtung nach einem der Ansprüche 1 bis 8, **dadurch gekennzeichnet, dass** das Modul (10) zum Anpressen und Kühlen der Kunststofffolie auf einem mehrere Rollen (12) aufweisenden Wagen (11) angeordnet ist.

10. Vorrichtung nach einem der Ansprüche 1 bis 9, **dadurch gekennzeichnet, dass** zur Verbindung des Moduls (10) mit dem Walzenstuhl (3) zumindest ein Zentrierbolzen (13) vorgesehen ist.

11. Vorrichtung nach Anspruch 10 **dadurch gekennzeichnet, dass** das Modul (10) zumindest einen konischen Zentrierbolzen (13) aufweist, der sich zu seinen freien Enden hin verjüngt.

12. Vorrichtung nach Anspruch 11, **dadurch gekennzeichnet, dass** die Achse des konischen Zentrierbolzens (13) im Wesentlichen senkrecht zu einer Anschlagplatte (24) des Wagens (11) angeordnet ist.

13. Vorrichtung nach einem der Ansprüche 1 bis 12, **dadurch gekennzeichnet, dass** zur Befestigung des Wagens (10) an dem Walzenstuhl (3) Schrauben (14) vorgesehen sind.

14. Vorrichtung nach einem der Ansprüche 1 bis 13, **dadurch gekennzeichnet, dass** zur Verbindung von Kühlflüssigkeitsleitungen zwischen dem Modul (10) und der übrigen Vorrichtung Steckverbindungen (16, 17) vorgesehen sind.

15. Vorrichtung nach einem der Ansprüche 1 bis 14, **dadurch gekennzeichnet, dass** zur Verbindung von Hydraulik- und bzw. oder Pneumatikleitungen zwischen dem Modul (10) und der übrigen Vorrichtung Steckverbindungen (16, 17) vorgesehen sind.

16. Vorrichtung nach einem der Ansprüche 1 bis 15, **dadurch gekennzeichnet, dass** zur Verbindung von Stromleitungen zwischen dem Modul (10) und der übrigen Vorrichtung Steckverbindungen (16, 17) vorgesehen sind.

## Claims

1. Device (1) for manufacturing plastics films from a plastics melt with a roll frame (3) in which at least one chill roll (2) is rotatably mounted, wherein a part of the device (1) is exchangeable, and is able to be fastened to the roll frame (3) for pressing the plastics film against the chill roll (2) mounted in the roll frame (3) and for chilling the same, **characterized in that**, for the manufacture of various plastics films, respectively one of the various modules (10) is provided as an exchangeable part, wherein a module (10) has a roll (9) for pressing and chilling the plastics film, and a further module (10) is provided, which has a continuous band (22) for surface smoothing, for pressing and chilling the plastics film.

2. Device according to Claim 1, **characterized in that** the exchangeable module (10) is arranged such that it can be displaced or pivoted.

3. Device according to Claim 1 or 2 **characterized in that** two chill rolls (2) for chilling the plastics film are provided in the roll frame (3).

4. Device according to Claim 1 to 3, **characterized in that** the module (10) for pressing and chilling the plastics film, having the roll (9), has a roll with a plastics surface, a metal roll or an embossing roll.

5. Device according to Claim 1 to 3, **characterized in that** the module (10) for pressing and chilling the plastics film has a chilled continuous band (22) for surface-smoothing.

6. Device according to Claim 1 to 3, **characterized in that** the module (10) for pressing and chilling the plastics film has an air knife (18).

7. Device according to Claim 1 to 3, **characterized in that** the module for pressing and chilling the plastics film has a module for surface-pressing of the plastics film.

8. Device according to one of Claims 1 to 7, **characterized in that** a device (8) for introducing the plastics melt is disposed between the module (10) for pressing and chilling the plastics film, in the fastened state, and a first roll (2) mounted in the roll frame.

9. Device according to one of Claims 1 to 8, **characterized in that** the module (10) for pressing and chilling the plastics film is disposed on a trolley (11) having a plurality of rolls (12).

10. Device according to one of Claims 1 to 9, **characterized in that** at least one centering bolt (13) is provided for connecting the module (10) to the roll frame (3).

11. Device according to Claim 10, **characterized in that** the module (10) has at least one conical centering bolt (13), which is tapered in the direction of its free ends.

12. Device according to Claim 11, **characterized in that** the axis of the conical centering bolt (13) is arranged essentially perpendicular to a stop plate (24) of the trolley (11).

13. Device according to one of Claims 1 to 12, **characterized in that** screws (14) are provided for fastening the trolley (10) to the roll frame (3).

14. Device according to one of Claims 1 to 13, **characterized in that** plug connections (16, 17) are provided for the connection of coolant lines between the module (10) and the rest of the device.

15. Device according to one of Claims 1 to 14, **characterized in that** the plug connections (16, 17) are provided for the connection of hydraulic and/or pneumatic lines between the module (10) and the rest of the device.

16. Device according to one of Claims 1 to 15, **characterized in that** plug connections (16, 17) are provided for the connection of power lines between the module (10) and the rest of the device.

## Revendications

1. Dispositif(1) pour fabriquer des feuilles de matériau synthétique à partir d'une masse fondue de matériau synthétique avec une cage à cylindres (3), dans lequel est monté à rotation au moins un cylindre de refroidissement (2), une partie du dispositif(1) pouvant être échangée et fixée sur le cylindre de refroidissement (2) monté dans la cage à cylindres (3) pour presser la feuille de matériau synthétique et refroidir celle-ci sur le cage à cylindres (3), **caractérisé en ce que**, pour fabriquer diverses feuilles de matériau synthétique, il est prévu respectivement un des différents modules (10) comme partie échangeable, dans lequel un module (10) présente un cylindre (9) pour presser et refroidir la feuille de matériau synthétique et il est prévu un autre module (10) qui, pour presser et refroidir la feuille de matériau synthétique, présente une bande sans fin (22) pour le lissage en surface.

2. Dispositif selon la revendication 1, **caractérisé en ce que** le module échangeable (10) est agencé pour pouvoir coulisser ou pivoter.

3. Dispositif selon la revendication 1 ou 2, **caractérisé en ce qu'**il est prévu dans la cage à cylindres (3) deux cylindres de refroidissement (2) pour refroidir la feuille de matériau synthétique.

4. Dispositif selon les revendications 1 à 3, **caractérisé en ce que** le module (10) présentant le cylindre (9) pour presser et refroidir la feuille de matériau synthétique présente un cylindre ayant une surface en matériau synthétique, un cylindre métallique ou un cylindre d'estampage.

5. Dispositif selon les revendications 1 à 3, **caractérisé en ce que** le module (10) destiné à presser et à refroidir la feuille de matériau synthétique présente une bande sans fin (22) refroidie pour le lissage en surface.

6. Dispositif selon les revendications 1 à 3, **caractérisé en ce que** le module (10) destiné à presser et à refroidir la feuille de matériau synthétique présente une racle à air comprimé (18).

7. Dispositif selon les revendications 1 à 3, **caractérisé en ce que** le module destiné à presser et à refroidir la feuille de matériau synthétique présente un module pour presser la surface de la feuille de matériau synthétique.

8. Dispositif selon l'une quelconque des revendications 1 à 7, **caractérisé en ce qu'**un dispositif (8) pour introduire la masse fondue de matériau synthétique est aménagé entre le module (10) destiné à presser et à refroidir la feuille de matériau synthétique à l'état fixe et un premier cylindre (2) monté dans la cage à cylindres (3).

9. Dispositif selon l'une quelconque des revendications 1 à 8, **caractérisé en ce que** le module (10) destiné à presser et à refroidir la feuille de matériau synthétique est aménagé sur un chariot (11) présentant plusieurs galets (12).

10. Dispositif selon l'une quelconque des revendications 1 à 9, **caractérisé en ce que**, pour raccorder le module (10) à la cage à cylindres (3), on prévoit au moins un boulon de centrage (13).

11. Dispositif selon la revendication 10, **caractérisé en ce que** le module (10) présente au moins un boulon de centrage conique (13) qui s'amincit vers son extrémité libre.

12. Dispositif selon la revendication 11, **caractérisé en ce que** l'axe du boulon de centrage conique (13) est aménagé de manière sensiblement perpendiculaire à une plaque de butée (24) du chariot (11).

13. Dispositif selon l'une quelconque des revendications 1 à 12, **caractérisé en ce que** l'on prévoit des vis (14) pour fixer le chariot (10) sur la cage à cylindres (3).

14. Dispositif selon l'une quelconque des revendications 1 à 13, **caractérisé en ce que** l'on prévoit des raccords d'enfichage (16, 17) pour raccorder des conduites de liquide de refroidissement entre le module (10) et le reste du dispositif.

15. Dispositif selon l'une quelconque des revendications 1 à 14, **caractérisé en ce que** l'on prévoit des raccords d'enfichage (16, 17) pour raccorder des conduites hydrauliques et/ou pneumatiques entre le module (10) et le reste du dispositif.

16. Dispositif selon l'une quelconque des revendications 1 à 15, **caractérisé en ce que** l'on prévoit des raccords d'enfichage (16, 17) pour raccorder des lignes de courant entre le module (10) et le reste du dispositif.
